# EUROPÄISCHE PATENTANMELDUNG

(11) **EP 1 281 462 A2**
(43) Veröffentlichungstag der Anmeldung: **05.02.2003**
(21) Anmeldenummer: 02011228.0
(22) Anmeldetag: 22.05.2002
(51) Int. Cl.: B23B 31/28

(54) **Werkzeugmaschine sowie Verfahren zum Bearbeiten von Werkstücken**

(30) Priorität: 30.07.2001 DE 10138748
(71) Anmelder: STAMA MASCHINENFABRIK GMBH, D-73278 Schlierbach (DE)
(72) Erfinder: Grund, Peter, Dr., 78647 Trossingen (DE); Blazek, Pavel, 73277 Owen (DE)
(74) Vertreter: Otten, Hajo, Dr.-Ing.

(57) **Zusammenfassung**

Die Erfindung betrifft eine Werkzeugmaschine mit einer Werkstückaufnahme (26), in die durch Betätigung eines Stellelements (30, 78; 70, 82) insbesondere stangen- oder scheibenförmige Werkstücke (32) einspannbar sind, und einem Spindelkopf (18) mit einer darin aufgenommenen Werkzeugspindel (22), in die Werkzeuge zur Bearbeitung der Werkstücke (32) einspannbar sind, wobei der Spindelkopf (18) und die Werkstückaufnahme (26) relativ zueinander verfahrbar sind. Es wird vorgeschlagen, daß die Werkzeugmaschine (10) ein von der Werkzeugspindel (22) antreibbares Betätigungselement (40; 58, 60) zur Betätigung des Stellelements (30, 78; 70, 82) aufweist (Fig. 3).

## Beschreibung

Die Erfindung betrifft eine Werkzeugmaschine mit einer Werkstückaufnahme, in die durch Betätigung eines Stellelements insbesondere stangen- oder scheibenförmige Werkstücke einspannbar sind, und einem Spindelkopf mit einer darin aufgenommenen Werkzeugspindel, in die Werkzeuge zur Bearbeitung der Werkstücke einspannbar sind, wobei der Spindelkopf und die Werkstückaufnahme relativ zueinander verfahrbar sind.

Die Erfindung betrifft ferner ein Verfahren zum Bearbeiten von insbesondere stangen- oder scheibenförmigen Werkstücken mit Hilfe einer Werkzeugmaschine, die eine Werkstückaufnahme, in die durch Betätigung eines Stellelements die Werkstücke einspannbar sind, sowie einen Spindelkopf mit einer darin aufgenommenen Werkzeugspindel aufweist, in die Werkzeuge zur Bearbeitung der Werkstücke einspannbar sind.

Außerdem betrifft die Erfindung eine Werkstückaufnahme sowie einen neuartigen Verstellkopf hierfür.

Eine Werkzeugmaschine, ein Verfahren sowie eine Werkstückaufnahme dieser Art sind aus der DE 196 35 258 C1 bekannt.

Die bekannte Werkzeugmaschine ist eine Fahrständermaschine für die Bohr-, Dreh- und Fräsbearbeitung von vorzugsweise stangenoder scheibenförmigen Werkstücken. Auf einem Maschinenbett der Werkzeugmaschine ist eine Werkstückaufnahme in Form eines Spannfutters angeordnet, die mit einem Drehantrieb versehen ist, um eine Drehbearbeitung der Werkstücke zu ermöglichen. Die Drehbarkeit des Spannfutters erlaubt es außerdem, das Werkstück bei einer Bohr- oder Fräsbearbeitung um seine Längsachse zu verstellen, so daß eine spanabhebende Bearbeitung an allen vier Längsseiten des Werkstückes mit Hilfe von in die Werkzeugspindel eingespannten Werkzeugen möglich ist.

Das Spannfutter ist um eine senkrecht zu seiner Längsachse verlaufende Querachse schwenkbar gelagert. Wird das Spannfutter z.B. um 90° nach oben geschwenkt, so kann auch die Stirnfläche des Werkstücks mittels eines in die Werkzeugspindel eingesetzten Werkzeugs bearbeitet werden.

In der Praxis hat sich allerdings gezeigt, daß das Ein-, Umund Ausspannen von Werkstücken bei derartigen Spannfuttern relativ zeitaufwendig ist. Eine Bedienperson muß hierzu mit einem Stellschlüssel ein Stellelement an dem Spannfutter verstellen, um die Backen zu lösen oder anzuziehen. Beim Anziehen ist ggf. ein Drehmomentschlüssel zu verwenden, um eine genau definierte Spannkraft an den Backen einzustellen. Zwar sind im Stand der Technik auch kraftbetriebene Spannfutter bekannt, bei denen die Backen des Spannfutters z.B. elektromotorisch oder hydraulisch angetrieben werden. Derartige kraftbetriebene Spannfutter sind allerdings, inbesondere wenn sie sowohl um ihre Längsachse drehbar als auch um eine dazu senkrechte Querachse schwenkbar sein sollen, konstruktiv aufwendig. Dies liegt u.a. daran, daß auch mit kraftbetriebenen Spannfuttern in der Regel genau definierte Spannkräfte erzeugbar sein müssen, was den Einsatz einer aufwendigen Steuerungstechnik erfordert.

Es ist daher Aufgabe der Erfindung, eine Werkzeugmaschine sowie ein Verfahren der jeweils eingangs genannten Art derart weiterzubilden, daß bei geringem konstruktiven Aufwand ein schnelles Ein-, Um- und Ausspannen von Werkstücken in der bzw. aus der Werkstückaufnahme ermöglicht wird.

Bei der eingangs erwähnten Werkzeugmaschine wird diese Aufgabe dadurch gelöst, daß die Werkzeugmaschine ein von der Werkzeugspindel antreibbares Betätigungselement zur Betätigung des Stellelements aufweist.

Bei dem eingangs erwähnten Verfahren wird diese Aufgabe durch folgende Schritte gelöst:
a) Bereitstellen eines durch die Werkzeugspindel antreibbaren Betätigungselements zur Betätigung des Stellelements und Verbinden des Betätigungselement mit der Werkzeugspindel;
b) Relatives Verfahren des Spindelkopfs gegenüber der Werkstückaufnahme derart, daß das Betätigungselement auf das Stellelement wirken kann, um dieses zu öffnen oder zu schließen;
c) Entnehmen und/oder Einführen eines Werkstückes aus der bzw. in die Werkstückaufnahme;
d) Einspannen des Werkstückes in die Werkstückaufnahme, indem das Stellelement durch Antreiben des Betätigungselements betätigt wird;
e) Entfernen des Betätigungselements und Einsetzen eines Werkzeugs in die Werkzeugspindel;
f) Bearbeiten des Werkstücks mit dem Werkzeug;
g) Wiederholen der Schritte b) bis d) zum Aus- oder Umspannen des Werkstückes aus bzw. in die Werkstückaufnahme.

Der Erfindung liegt die Erkenntnis zugrunde, daß durch die ohnehin vorhandene Werkzeugspindel bereits ein Antrieb zur Verfügung steht, mit dem sich die Werkstückaufnahme sehr präzise betätigen läßt. Werkzeugspindeln verfügen nämlich über eine aufwendige Antriebs- und Steuerungstechnik, so daß sich damit genau definierte Drehmomente erzeugen lassen. Ferner ist in der Regel auch der Drehwinkel der Werkzeugspindel präzise steuerbar. Mit Hilfe des von der Werkzeugspindel antreibbaren Betätigungselements läßt sich die genau steuerbare Drehbewegung der Werkzeugspindel kontrolliert auf ein Stellelement übertragen, das an der Werkstückaufnahme zur Betätigung einer Spanneinrichtung vorgesehen ist.

Die Werkstückaufnahme benötigt daher keinerlei Antriebe zur Betätigung der Spanneinrichtung, was deren Konstruktion erheblich vereinfacht und die Zuverlässigkeit erhöht. Gleichwohl kann es im Einzelfall aus verschiedenen Gründen zweckmäßig sein, dennoch Antriebe in der Werkstückaufnahme vorzusehen. So können z.B. einfach ausgeführte Antriebe sinnvoll sein, wenn gelegentlich sehr schnell Werkstücke eingespannt werden sollen, bei denen es auf präzise eingehaltene Spannkräfte nicht ankommt.

Die Betätigung des Stellelements an der Werkstückaufnahme erfordert es, daß das Betätigungselement zunächst in eine Position überführt wird, in der es auf das Stellelement wirken kann. Da das Betätigungselement vorzugsweise unmittelbar in die Werkzeugspindel eingesetzt oder so an dem Spindelkopf gehalten wird, daß es von der Werkzeugspindel antreibbar ist, kann dies durch ein relatives Verfahren zwischen dem die Werkzeugspindel aufnehmenden Spindelkopf und der Werkstückaufnahme erfolgen, wobei es unbeachtlich ist, ob der Spindelkopf gegenüber der feststehenden Werkstückaufnahme, diese gegenüber dem feststehenden Spindelkopf oder sogar beide Teile gleichzeitig verfahren werden. Je nach der räumlichen Lage der Betätigungsrichtung, in der das Stellelement betätigbar ist (z.B. Längsachse einer Gewindespindel), und der Art der Werkstückbearbeitung (z.B. 5-Seiten-Bearbeitung) kann es außerdem erforderlich sein, die Werkstückaufnahme gegenüber dem Spindelkopf um ihre Längsachse zu verdrehen oder um eine Querachse zu verschwenken, damit das Betätigungselement auf das Stellelement einwirken kann.

Die Betätigung des Stellelements zum Einspannen des Werkstückes in die Werkstückaufnahme kann einmalig vor dem Bearbeiten des Werkstückes erfolgen. Das Betätigungselement ist dann zunächst mit der Werkzeugspindel zu verbinden und nach dem Einspannen gegen ein Werkzeug auszutauschen. Nach Abschluß der Bearbeitung durch eines oder mehrere Werkzeuge wird das Betätigungselement wieder mit der Werkzeugspindel verbunden und das Stellelement zum Ausspannen des Werkstückes entsprechend betätigt. Es ist aber ebenso möglich, nach dem erstmaligen Einspannen des Werkstückes und ersten Bearbeitungsschritten das Werkstück in der Werkstückaufnahme umzuspannen, um z.B. auch den zuvor eingespannten Bereich des Werkstückes, also die sogenannte 6. Seite, nach einem Wenden des Werkstückes um 180° bearbeiten zu können. Das Betätigungselement ist in diesem Fall auch zwischenzeitlich mit der Werkzeugspindel zu verbinden, also in der Regel in diese einzuspannen.

Die Verbindung des Betätigungselements mit der Werkzeugspindel kann von Hand, aber auch automatisiert erfolgen. Im letztgenannten Fall kann das Betätigungselement z.B. in einem Werkzeugmagazin gelagert sein, von wo aus es von dem Spindelkopf angefahren oder von einer Handhabungsvorrichtung diesem zugeführt werden kann.

Grundsätzlich ist die Erfindung bei allen Arten von Werkstückaufnahmen anwendbar; besondere Vorteile ergeben sich jedoch, wenn die Werkstückaufnahme als Spannfutter mit mehreren Spannbacken ausgebildet ist, die in einer radialen Richtung zum Zwecke des Ein- und Ausspannens gemeinsam durch Betätigung des Stellelements verstellbar sind.

In diesem Fall läßt sich durch nur eine Stellbewegung die gesamte Werkstückaufnahme betätigen. Dadurch wird die Anzahl der Verfahrbewegungen zwischen der Werkstückaufnahme und der Werkzeugspindel klein gehalten.

Bevorzugt ist es außerdem, wenn das Stellelement durch Verdrehen betätigbar und das Betätigungselement ein Schrauber ist.

Auf diese Weise ist eine sehr einfache Ausführung des Betätigungselements möglich, da dieses dann z.B. als einfacher Spannfutterschlüssel oder Schraubendreher mit einem daran ausgebildeten üblichen Werkzeughalter, bspw. mit Hohlschaftkegel (HSK), ausgeführt sein kann, der genauso wie die zur Bearbeitung der Werkstücke vorgesehenen Werkzeuge in die Werkzeugspindel eingespannt wird. Durch Verdrehen betätigbare Stellelemente finden in herkömmlichen Spannfuttern häufig Verwendung, z.B. in Form eines Zahntriebs oder einer Gewindespindel.

Bei einer anderen bevorzugten Ausgestaltung der Erfindung ist das Betätigungselement Teil eines an dem Spindelkopf lösbar und drehfest befestigbaren Verstellkopfes.

Während bei Betätigungselementen, die unmittelbar mit der Werkzeugspindel verbunden werden, nur Drehbewegungen auf das Stellelement der Werkstückaufnahme übertragen werden können, lassen sich mit einem an dem Spindelkopf drehfest befestigten Verstellkopf auch andere Stellbewegungen erzeugen. So erfolgt z.B. bei Keilhaken- oder Rundkolbenfuttern die Betätigung der Spannbacken des Spannfutters über eine Zugstange. In diesem Fall ist die Drehbewegung der Werkzeugspindel in dem Verstellkopf in eine axiale Zug- oder Schubbewegung umzusetzen; das Betätigungselement kann dann z.B. als Zughülse ausgebildet sein.

Der Verstellkopf ist aber auch bei Werkstückaufnahmen vorteilhaft, die sich durch ein Verdrehen des Stellelements betätigen lassen. Die drehfeste Befestigung des Verstellkopfes an dem Spindelkopf erlaubt nämlich die Übertragung von Gegenmomenten zwischen dem Verstellkopf und dem Spindelkopf, so daß in dem Verstellkopf Getriebe angeordnet sein können. Dadurch muß die Abtriebsrichtung nicht mit der Drehachse der Werkzeugspindel übereinstimmen. Vielmehr erlaubt es der Verstellkopf, die Drehachse des Betätigungselements durch ein Getriebe seitlich zu versetzen oder zu kippen, z.B. um 90°. Dadurch kann ggf. das Stellelement der Werkstückaufnahme auf kürzerem Wege von dem Betätigungselement erreicht werden.

Zur drehfesten Befestigung an dem Spindelkopf kann der Verstellkopf z.B. formschlüssig mit Zapfen o.ä. in entsprechend geformte, an dem Spindelkopf ausgebildete Ausnehmungen eingesetzt werden. Das Betätigungselement des Verstellkopfes ist dann gleichzeitig über ein Kupplungsteil, z.B. einen Hohlschaftkegel,, mit der Werkzeugspindel verbunden. Auch der Verstellkopf kann wie ein normales Werkzeug in einem Werkzeugmagazin gelagert und automatisch an dem Spindelkopf befestigt, in der Regel in dessen Werkzeugaufnahme eingespannt werden.

Besonders bevorzugt ist es, wenn der Verstellkopf ein weiteres Betätigungselement aufweist, das eine andere Betätigungsrichtung als das eine Betätigungselement aufweist.

Das Vorsehen eines zweiten Betätigungselements mit anderer Betätigungsrichtung ermöglicht es, Werkstücke sowohl in horizontaler als auch in vertikaler Position des Spannfutters zu spannen. Scheibenförmige Werkstücke werden bevorzugt in vertikaler Position des Spannfutters gespannt, da diese bedingt durch die Schwerkraft infolge ihres Eigengewichts in der Regel in vertikaler Lage sicher auf den Auflagepunkten aufliegen und dann gespannt werden können. Wellen- oder stangenförmige Werkstücke werden zur sicheren Ausrichtung häufig mit Unterstützung einer Lünette oder einer Gegenspitze in horizontaler Lage des Spannfutters eingelegt und gespannt.

Ein weiterer Vorteil ist darin zu sehen, daß die Zahl der Verfahrvorgänge zwischen dem Spindelkopf und der Werkstückaufnahme verringert wird. Dieser Aspekt kommt dann zum Tragen, wenn der Spindelkopf und die Werkstückaufnahme relativ zueinander verschwenkbar sind, z.B. zum Zwecke einer 5-Seiten-Bearbeitung der Werkstücke, wobei es nicht darauf ankommt, ob die Werkstückaufnahme oder der Spindelkopf schwenkbar gelagert sind. Bei einer solchen Verschwenkbarkeit ist das Stellelement jetzt in zwei unterschiedlichen relativen Schwenkpositionen zwischen der Werkstückaufnahme und dem Spindelkopf durch jeweils ein Betätigungselement erreichbar. Je nach der räumlichen Anordnung des zweiten Betätigungselements kann somit der durchschnittliche Verfahrweg erheblich reduziert werden, der erforderlich ist, um von einer ersten Position, in der das Werkstück mit einem Werkzeug bearbeitet werden kann, zu einer zweiten Position zu gelangen, in der das Werkstück mit Hilfe eines der Betätigungselemente umgespannt werden kann.

Gegenstand der Erfindung ist daher auch ein derartig ausgebildeter Verstellkopf mit zwei Betätigungselementen, die in unterschiedlichen Richtungen wirken.

Bei einer bevorzugten Weiterbildung dieser Ausgestaltung wirkt das eine Betätigungselement parallel zu einer Drehachse der Werkzeugspindel und das weitere Betätigungselement senkrecht hierzu.

Bei einer anderen bevorzugten Ausgestaltung weist die Werkstückaufnahme ein weiteres Stellelement auf, durch dessen Betätigung ebenfalls ein Ein- oder Ausspannen bewirkt wird und das in einer anderen Betätigungsrichtung als das eine Stellelement betätigbar ist.

Ein solches zweites Stellelement hat im Prinzip die gleiche Wirkung wie das vorstehend beschriebene zweite Betätigungselement. Auch damit lassen sich die Werkstücke in der jeweils günstigsten Position einspannen und ferner die Verfahrwege verringern, die beim Übergang von einer Bearbeitung zu einem Ein-, Aus- oder Umspannen des Werkstücks oder umgekehrt erforderlich sind. Es ist auch möglich, sowohl ein zweites Betätigungselement als auch ein zweites Stellelement vorzusehen. Auf diese lassen sich die Verfahrwege weiter verringern; der dadurch erzielbare Zeitgewinn ist allerdings im Verhältnis zum zusätzlichen konstruktiven Aufwand etwas geringer.

Eine Werkstückaufnahme, insbesondere ein Spannfutter, das wie vorstehend beschrieben zwei Stellelemente mit unterschiedlichen Betätigungsrichtungen aufweist, ist ebenfalls Gegenstand der Erfindung.

Falls als Werkstückaufnahme wie oben erwähnt ein Spannfutter verwendet wird, so ist es außerdem bevorzugt, wenn das eine Stellelement in radialer Richtung und das weitere Stellelement in axialer Richtung bezüglich einer Längsachse des Spannfutters betätigbar ist.

Auch durch diese Maßnahme ist ein Spannen sowohl in horizontaler als auch in vertikaler Lage möglich. Ferner werden die erforderlichen Verfahrwege besonders kurz, da zum Erreichen einer Position, in der die Werkstückaufnahme betätigt werden kann, maximal ein relatives Verschwenken von 45° erforderlich ist.

Es versteht sich, daß die vorstehend genannten und die nachfolgend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung der Ausführungsbeispiele anhand der Zeichnung. Darin zeigen:
- Fig. 1: eine erfindungsgemäße Werkzeugmaschine in einer stark vereinfachten, nicht maßstäblichen Darstellung, bei der in einer Werkzeugspindel ein Betätigungselement eingesetzt ist, mit dem ein Stellelement einer Werkstückaufnahme betätigbar ist;
- Fig. 2: die Werkzeugmaschine aus Fig. 1, deren Spindelkopf jedoch gegenüber der Werkstückaufnahme verfahren ist, so daß das Betätigungselement auf das Stellelement wirken kann;
- Fig. 3: eine der Fig. 1 entsprechende Darstellung, wobei an dem Spindelkopf ein Verstellkopf mit zwei Betätigungselementen befestigt ist;
- Fig. 4: die Werkzeugmaschine aus Fig. 3 mit um 90° verschwenkter Werkstückaufnahme;
- Fig. 5: eine der Fig. 1 entsprechende Darstellung, wobei die Werkstückaufnahme zwei Stellelemente aufweist;
- Fig. 6: die Werkzeugmaschine aus Fig. 5 mit um 90° verschwenkter Werkstückaufnahme;
- Fig. 7: eine vereinfachte Prinzipskizze, die in einem radialen Schnitt einige wesentliche Teile der in den Fig. 5 und 6 gezeigten Werkstückaufnahme zeigt; und
- Fig. 8: eine vereinfachte Prinzipskizze, die in einem axialen Schnitt wesentliche Teile des in den Fig. 3 und 4 gezeigten Verstellkopfes zeigt.

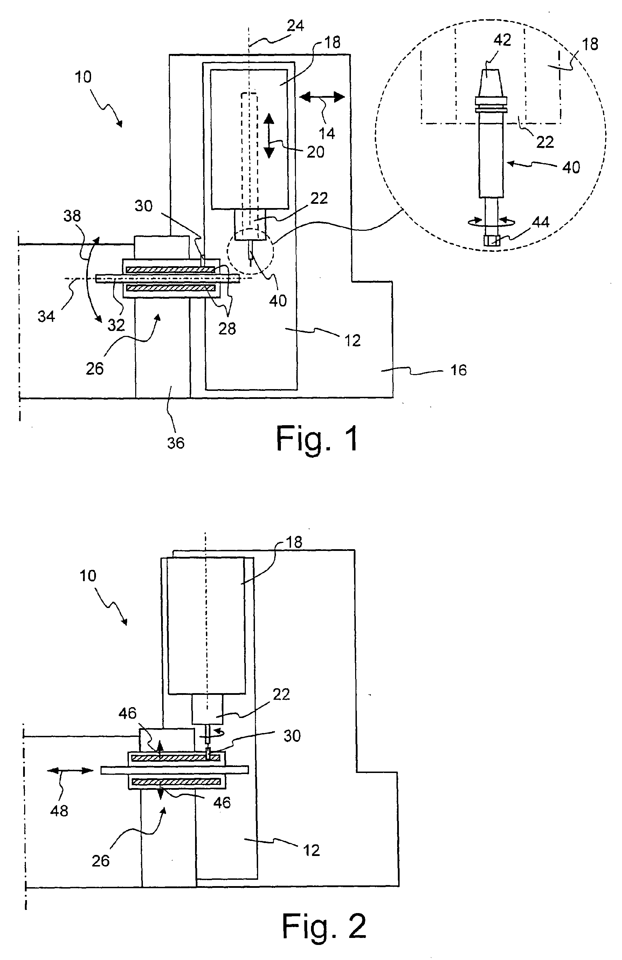

In Fig. 1 ist eine erfindungsgemäße Werkzeugmaschine in einer stark vereinfachten, nicht maßstäblichen Darstellung gezeigt und insgesamt mit 10 bezeichnet. Die Werkzeugmaschine weist einen Fahrständer 12 auf, der in einer durch einen Pfeil 14 angedeuteten X-Richtung und in einer senkrecht zur Papierebene verlaufenden Y-Richtung verfahrbar auf einem Maschinengestell 16 angeordnet ist. An dem Fahrständer 12 ist ein Spindelkopf 18 in einer durch einen Pfeil 20 angedeuteten Z-Richtung verfahrbar befestigt. Zusammen mit dem Fahrständer 12 ist der Spindelkopf somit in allen drei Raumrichtungen verfahrbar. Der Spindelkopf 18 nimmt eine gestrichelt angedeutete Werkzeugspindel 22 sowie nicht in Fig. 1 dargestellte Antriebs- und Steuereinrichtungen auf, mit denen sich die Werkzeugspindel 22 mit hoher Genaugigkeit in eine Drehbewegung um eine mit 24 bezeichnete Drehachse versetzen läßt.

Die Werkzeugmaschine 10 weist ferner eine Werkstückaufnahme 26 auf, die in Fig. 1 vereinfacht in einem axialen Schnitt dargestellt ist. Die Werkstückaufnahme 26 ist als 3-Backen-Spannfutter ausgebildet und dadurch insbesondere zur Aufnahme von stangen- oder scheibenförmigen Werkstücken geeignet. Spannbacken 28 der Werkstückaufnahme 26 sind dabei durch ein Stellelement 30 in einer radialen Richtung zum Zwecke des Ein- und Ausspannens eines Werkstücks 32 verstellbar. Das Stellelement 30 wirkt dabei auf eine in Fig. 1 nicht dargestellte Spanneinrichtung, die die auf das Stellelement ausgeübte Kraft gleichmäßig auf die Spannbacken 28 überträgt.

Die Werkstückaufnahme 26 ist um ihre mit 34 bezeichnete Längsachse in nicht näher dargestellter Weise drehbar gelagert und mit einem eigenen Antrieb versehen, so daß die Werkzeugmaschine 10 eine Drehbearbeitung des Werkstücks 32 ermöglicht. Außerdem ist die gesamte Werkstückaufnahme 26 an einer Brücke 36 um eine in Y-Richtung verlaufende Querachse verschwenkbar gelagert, wie dies in Fig. 1 durch einen Pfeil 38 angedeutet ist.

In die Werkzeugspindel 20 ist wie ein übliches Werkzeug ein Betätigungselement in Form eines Schraubers 40 eingespannt, der, wie aus der vergrößerten Darstellung erkennbar ist, einen Hohlschaftkegel 42 zum Einspannen in die Werkzeugspindel 20 und einen Schraubschlüssel 44 aufweist. Mit dem Schraubschlüssel 44 kann das Stellelement 30 der Werkstückaufnahme 26 betätigt werden.

Fig. 1 zeigt die Werkzeugmaschine 10 in einem Zustand nach einer Bearbeitung des Werkstückes 32 mit einem in die Werkzeugspindel 20 eingesetzten Werkzeug, z.B. einem Drehwerkzeug. Soll nun das Werkstück aus- oder umgespannt werden, so wird, wie in Fig. 1 dargestellt, der Schrauber 40 in die Werkzeugspindel 20 eingespannt. Anschließend wird der Spindelkopf 18 derart verfahren, daß der Schrauber 40 in eine Position gelangt, in der er an dem Stellelement 30 angreifen und dieses betätigen kann. Dieser Zustand ist in Fig. 2 dargestellt.

Durch Betätigen des Stellelements 30 mit Hilfe des Schraubers 40 werden die Spannbacken 28 gelöst, wie dies durch Pfeile 46 angedeutet ist. Das Werkstück 32 kann nun von Hand oder maschinell in der Werkstückaufnahme bewegt (siehe Pfeil 48), aus dieser herausgenommen und in veränderter Lage wieder eingeführt oder auch durch ein anderes Werkstück ersetzt werden. Um anschließend das Werkstück 32 oder ein anderes Werkstück wieder einzuspannen, wird die Werkzeugspindel 22 in Drehung versetzt, um über den Schrauber 40 das Stellelement 30 anzuziehen. Da durch die Werkzeugspindel genau definierte Drehmomente aufgebracht werden können, läßt sich das Werkstück präzise mit den vorgegebenen Spannkräften in die Werkstückaufnahme einspannen.

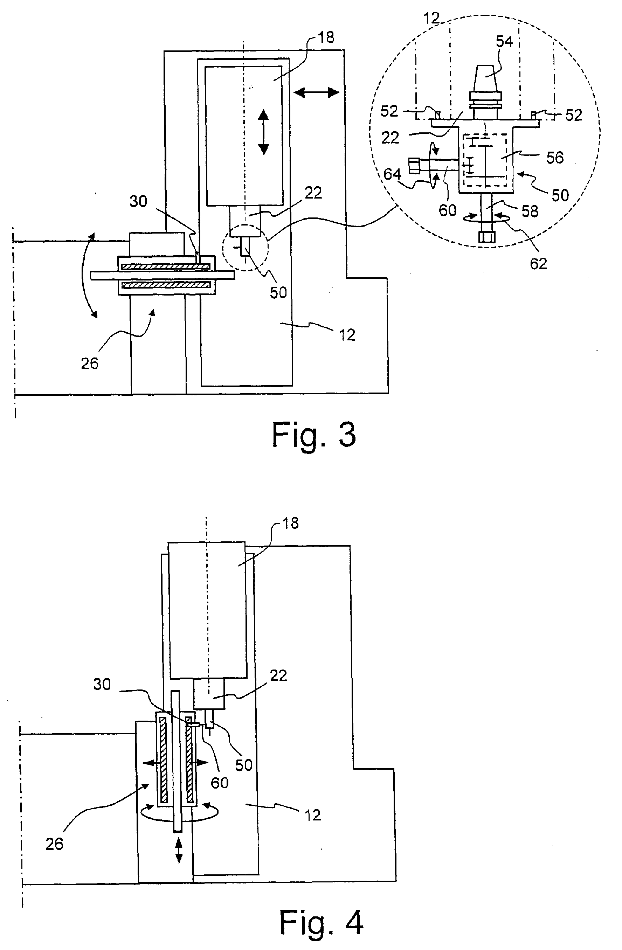

Die Fig. 3 und 4 zeigen ein anderes Ausführungsbeispiel der Erfindung, bei der ein Verstellkopf 50 so an dem Spindelkopf 18 befestigt ist, daß er von der Werkzeugspindel 22 angetrieben wird. Wie die vergrößerte Darstellung zeigt, weist der Verstellkopf 50 Bolzen 52 auf, mit denen er in entsprechende Ausnehmungen an der Stirnseite des Spindelkopfs 18 eingesetzt ist. Auf diese Weise ist der Verstellkopf 50 drehfest an dem Spindelkopf 18 gehalten. Die Befestigung des Verstellkopfes 50 erfolgt hier ebenfalls über einen daran ausgebildeten Hohlschaftkegel 54, der in die Werkzeugspindel 22 eingespannt ist. Über ein nur angedeutetes Getriebe 56 ist der Hohlschaftkegel 54 mit zwei senkrecht zueinander angeordneten Betätigungselementen 58 und 60 verbunden, die sich bei einer Drehung der Werkzeugspindel 22 synchron drehen, wie dies durch Pfeile 62 und 64 angedeutet ist.

Befindet sich die schwenkbar gelagerte Werkstückaufnahme 26 beim Ein-, Aus- oder Umspannen nicht wie in Fig. 2 dargestellt in einer horizontalen, sondern in einer vertikalen Lage zum Spannen von bspw. scheibenförmigen Werkstücken, so weist das Stellelement 30 nicht mehr nach oben oder in eine andere radiale Lage, von der aus es durch einfaches Drehen der Werkstückaufnahme 26 um die Längsachse 34 in die in Fig. 2 gezeigte Position überführt werden kann. Vielmehr ist das Stellelement 30 jetzt nur noch von der Seite her zugänglich. Bei Verwendung des Schraubers 40 aus den Fig. 1 und 2 müßte daher die Werkstückaufnahme 26 zunächst wieder in eine horizontale Position zurückgeschwenkt werden, um eine Betätigung durch den Schrauber 40 zu ermöglichen. Aufgrund des erfindungsgemäßen Verstellkopfes 50 ist es jedoch nun möglich, auch ohne eine solche zusätzliche Schwenkbewegung der Werkstückaufnahme 26 diese zu betätigen. Hierzu ist nämlich der Spindelkopf 18 lediglich in die in Fig. 4 gezeigte Lage zu verfahren. In dieser Lage kann das horizontal abgehende Betätigungselement 60 auf das Stellelement 30 einwirken, so daß die Spannbacken 28 gelöst werden können.

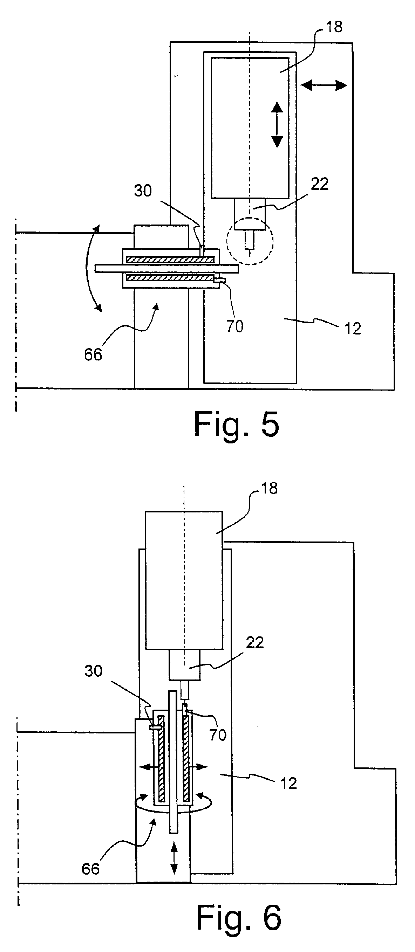

Die Fig. 5 und 6 zeigen ein weiteres Ausführungsbeispiel der Erfindung, bei der nicht ein Verstellkopf 50, sondern eine Werkstückaufnahme 66 unterschiedliche Betätigungsrichtungen ermöglicht. Die Werkstückaufnahme 66 weist hierzu neben dem Stellelement 30, welches radial zu betätigen ist, ein zweites Stellelement 70 auf, welches axial, d.h. von der Stirnseite der Werkstückaufnahme 66 her, betätigt werden kann. Falls sich, wie in Fig. 6 gezeigt, die Werkstückaufnahme 66 in einer vertikalen Lage befindet, weist das zweite Stellelement 70 vertikal nach oben, so daß es von einem einfachen Schrauber 40, wie er im Zusammenhang mit den Fig. 1 und 2 bereits erläutert wurde, betätigt werden kann. Ein Verstellkopf ist bei diesem Ausführungsbeispiel demnach nicht erforderlich, da die Werkstückaufnahme 66 selbst eine zweite Betätigungsrichtung ermöglicht.

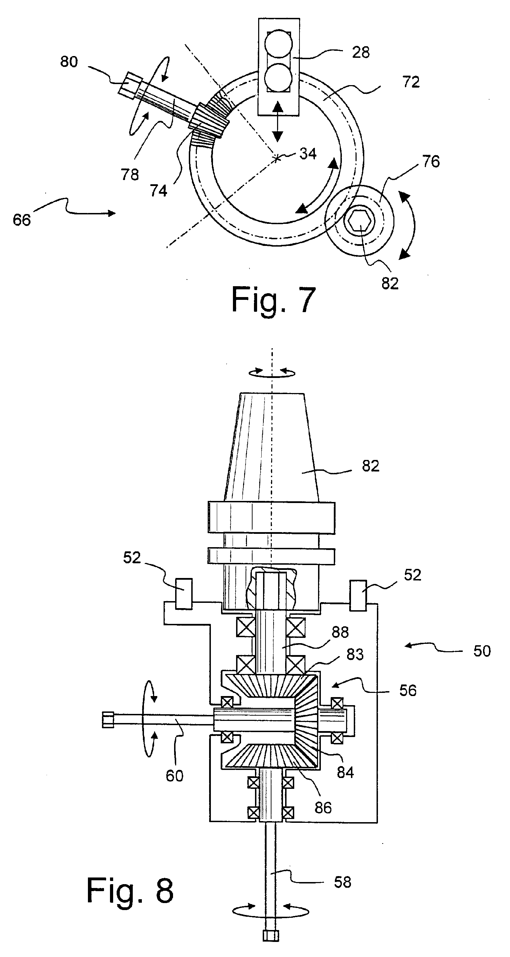

Fig. 7 zeigt eine vereinfachte Prinzipskizze, die in einem radialen Schnitt einige wesentliche Teile der in den Fig. 5 und 6 gezeigten Werkstückaufnahme 66 zeigt. Die Längsachse 34 der Werkstückaufnahme 66 verläuft in dieser Darstellung durch die Symmetrieachse eines Zahnrings 72, der zum einen über einen von der Unterseite her angreifenden, also in der Zeichenebene wirkenden Zahntrieb 74, zum anderen über ein Ritzel 76, das quer zur Zeichenebene wirkt, in Drehung um die Längsachse 34 versetzt werden kann. Der Zahntrieb 74 ist mit einem Drehbolzen 78 mit Sechskantkopf 80 verbunden. Der Drehbolzen 78 bildet dabei das erste, in radialer Richtung, also senkrecht zur Längsachse betätigbare Stellelement 30. An dem Ritzel 76 ist ebenfalls ein Sechskantkopf 82 befestigt, der das zweite, in Richtung der Längsachse 34 betätigbare Stellelement 70 bildet. Die Übertragung der Drehbewegung des Zahnrings 72 auf die Spannbacken 28, von denen in Fig. 7 nur eine gezeigt ist, erfolgt in an sich bekannter Weise mit Hilfe von Keil- oder' Spiralführungen. In den Sechskantkopf 80 bzw. 82 kann in beschriebener Weise ein Betätigungselement 58, 60 bzw. ein Schrauber 40 eingreifen.

Fig. 8 zeigt in einem axialen Schnitt den prinzipiellen Aufbau des in den Fig. 3 und 4 gezeigten Verstellkopfes 50. Das Getriebe 56 weist drei jeweils im rechten Winkel zueinander angeordnete Stirnzahnräder 83, 84 und 86 auf, die eine Drehung der mit dem Hohlschaftkegel 54 in nicht näher dargestellter Weise fest verbundenen Hauptwelle 88 auf die beiden Betätigungselemente 58 und 60 mit einem Übersetzungsverhältnis von 1:1 übertragen.

Es versteht sich, daß die vorstehend beschriebenen Ausführungsbeispiele lediglich exemplarischen Charakter haben und nicht einschränkend zu verstehen sind. Abwandlungen dieser Ausführungsbeispiele sind auf vielfältige Weise möglich. So muß die Betätigung der Stellelemente, wie eingangs bereits erwähnt, nicht unbedingt durch eine Drehbewegung erfolgen. Vielmehr kann der Verstellkopf die Drehbewegung der Werkzeugspindel z.B. auch in eine Zug- oder Schubbewegung umsetzen, die auf zwei oder auch mehrere an dem Verstellkopf angeordnete Betätigungselemente übertragen wird.

## Patentansprüche

1. Werkzeugmaschine mit einer Werkstückaufnahme (26), in die durch Betätigung eines Stellelements (30, 78; 70, 82) insbesondere stangen- oder scheibenförmige Werkstücke (32) einspannbar sind, und einem Spindelkopf (18) mit einer darin aufgenommenen Werkzeugspindel (22), in die Werkzeuge zur Bearbeitung der Werkstücke (32) einspannbar sind, wobei der Spindelkopf (18) und die Werkstückaufnahme (26) relativ zueinander verfahrbar sind, **dadurch gekennzeichnet, daß** die Werkzeugmaschine (10) ein von der Werkzeugspindel (22) antreibbares Betätigungselement (40; 58, 60) zur Betätigung des Stellelements (30, 78; 70, 82) aufweist.

2. Werkzeugmaschine nach Anspruch 1, **dadurch gekennzeichnet, daß** die Werkstückaufnahme (26) als Spannfutter mit mehreren Spannbacken (28) ausgebildet ist, die in einer radialen Richtung (46) zum Zwecke des Ein- und Ausspannens gemeinsam durch Betätigung des Stellelements (30, 78; 70, 82) verstellbar sind.

3. Werkzeugmaschine nach Anspruch 1 oder 2, **dadurch gekennzeichnet, daß** das Stellelement (30, 78; 70, 82) durch Verdrehen betätigbar ist und das Betätigungselement ein Schrauber (40) ist.

4. Werkzeugmaschine nach einem der vorhergehenden Ansprüche, **dadurch gekennzeichnet, daß** das Betätigungselement (58) Teil eines an dem Spindelkopf (18) lösbar und drehfest befestigbaren Verstellkopfes (50) ist.

5. Werkzeugmaschine nach Anspruch 4, **dadurch gekennzeichnet, daß** der Verstellkopf (50) ein weiteres Betätigungselement (60) aufweist, das eine andere Betätigungsrichtung als das eine Betätigungselement (58) aufweist.

6. Werkzeugmaschine nach Anspruch 5, **dadurch gekennzeichnet, daß** das eine Betätigungselement (58) parallel zu einer Drehachse (24) der Werkzeugspindel (22) und das weitere Betätigungselement (60) senkrecht hierzu wirkt.

7. Werkzeugmaschine nach einem der vorhergehenden Ansprüche, **dadurch gekennzeichnet, daß** die Werkstückaufnahme (26) ein weiteres Stellelement (70, 82) aufweist, durch dessen Betätigung ebenfalls ein Ein- oder Ausspannen bewirkt wird und das in einer anderen Betätigungsrichtung als das eine Stellelement (30, 78) betätigbar ist.

8. Werkzeugmaschine nach Anspruch 2 und nach Anspruch 5, **dadurch gekennzeichnet, daß** das eine Stellelement (30, 78) in radialer Richtung und das weitere Stellelement (70, 82) in axialer Richtung bezüglich einer Längsachse (34) des Spannfutters (26) betätigbar ist.

9. Verfahren zur Bearbeitung von insbesondere stangen- oder scheibenförmigen Werkstücken (32) mit Hilfe einer Werkzeugmaschine (10), die eine Werkstückaufnahme (26), in die durch Betätigung eines Stellelements (30, 78; 70, 82) die Werkstücke (32) einspannbar sind, sowie einen Spindelkopf (18) mit einer darin aufgenommenen Werkzeugspindel (22) aufweist, in die Werkzeuge zur Bearbeitung der Werkstücke (32) einspannbar sind, **gekennzeichnet durch** folgende Schritte:
a) Bereitstellen eines **durch** die Werkzeugspindel (18) antreibbaren Betätigungselements (40; 58, 60) zur Betätigung des Stellelements (30, 78; 70, 82) und Verbinden des Betätigungselement (40; 58, 60) mit der Werkzeugspindel (22);
b) Relatives Verfahren des Spindelkopfs (18) gegenüber der Werkstückaufnahme (26) derart, daß das Betätigungselement (40; 58, 60) zum Öffnen und Schließen auf das Stellelement (30, 78; 70, 82) wirken kann;
c) Entnehmen und/oder Einführen eines Werkstückes (32) aus der bzw. in die Werkstückaufnahme (26);
d) Einspannen des Werkstückes (32) in die Werkstückaufnahme (26), indem das Stellelement (30, 78; 70, 82) **durch** Antreiben des Betätigungselements (40; 58, 60) betätigt wird;
e) Entfernen des Betätigungselements (40; 58, 60) und Einsetzen eines Werkzeugs in die Werkzeugspindel (22);
f) Bearbeiten des Werkstücks (32) mit dem Werkzeug;
g) Wiederholen der Schritte b) bis d) zum Aus- oder Umspannen des Werkstückes (32) aus bzw. in die Werkstückaufnahme (26).

10. Verfahren nach Anspruch 9, **dadurch gekennzeichnet, daß** während der Bearbeitung des Werkstücks in Schritt f) die Werkstückaufnahme (26) und der Spindelkopf (18) relativ zueinander verschwenkt werden, und daß bei einem nachfolgenden Aus- oder Umspannen das Betätigungselement (40; 58, 60) auf ein weiteres Stellelement (70, 82) zur Betätigung der Werkstückaufnahme (26) einwirkt, das in einer anderen Betätigungsrichtung betätigbar ist als das eine Stellelement (30, 78).

11. Verfahren nach Anspruch 9, **dadurch gekennzeichnet, daß** während der Bearbeitung des Werkstücks in Schritt f) die Werkstückaufnahme (26) und der Spindelkopf (18) relativ zueinander verschwenkt werden, und daß bei einem nachfolgenden Aus- oder Umspannen auf das Stellelement (30, 78; 70, 82) ein weiteres von der Werkzeugspindel antreibbares Betätigungselement (60) einwirkt, das eine andere Betätigungsrichtung als das eine Betätigungselement (58) aufweist.

12. Werkstückaufnahme für eine Werkzeugmaschine (10), in die durch Betätigung eines Stellelements (30, 78) insbesondere stangen- oder scheibenförmige Werkstücke (32) ein- und ausspannbar sind, **dadurch gekennzeichnet, daß** die Werkstückaufnahme (26) ein weiteres Stellelement (70, 82) aufweist, durch dessen Betätigung ebenfalls ein Ein- oder Ausspannen bewirkt wird und das in einer anderen Betätigungsrichtung betätigbar ist als das eine Stellelement (30, 78).

13. Verstellkopf zum Betätigen wenigstens eines Stellelements (30, 78; 70, 82), das an einer Werkstückaufnahme (26) einer Werkzeugmaschine (10) ausgebildet ist und über dessen Betätigung Werkstücke (32) in die Werkstückaufnahme (26) eingespannt werden können, wobei der Verstellkopf (50) lösbar und drehfest an einem Spindelkopf (18) der Werkzeugmaschine (10) befestigbar ist und zwei von der Werkzeugspindel (22) antreibbare Betätigungselemente (78, 60) zur Betätigung des wenigstens einen Stellelements (30, 78; 70, 82) aufweist, die unterschiedliche Betätigungsrichtungen haben.

14. Verstellkopf nach Anspruch 13, **dadurch gekennzeichnet, daß** der Verstellkopf (50) als Betätigungselemente (58, 60) zwei Schrauber aufweist, von denen einer parallel zu einer Drehachse (24) der Werkzeugspindel (22) und der andere senkrecht hierzu angeordnet ist, wenn der Verstellkopf (50) an dem Spindelkopf (18) befestigt ist.
